(19) Europäisches Patentamt
European Patent Office
Office européen des brevets

(11) EP 2 855 175 B1

(12) **FASCICULE DE BREVET EUROPEEN**

(45) Date de publication et mention
de la délivrance du brevet:
**06.04.2016 Bulletin 2016/14**

(21) Numéro de dépôt: **13728458.4**

(22) Date de dépôt: **22.05.2013**

(51) Int Cl.:
***B60C 23/04*** (2006.01)

(86) Numéro de dépôt international:
**PCT/FR2013/051112**

(87) Numéro de publication internationale:
**WO 2013/175122 (28.11.2013 Gazette 2013/48)**

(54) **PROCEDE DE LECTURE DE DONNEES STOCKEES DANS UN DISPOSITIF ELECTRONIQUE POUR PNEUMATIQUE**

VERFAHREN ZUM AUSLESEN VON IN EINER ELEKTRONISCHEN VORRICHTUNG GESPEICHERTEN REIFENDATEN

METHOD FOR READING DATA STORED IN AN ELECTRONIC DEVICE FOR A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2012 FR 1254804**

(43) Date de publication de la demande:
**08.04.2015 Bulletin 2015/15**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeur: **PENOT, Thierry**
**63040 Clermont-Ferrand Cedex 9 (FR)**

(74) Mandataire: **Dequire, Philippe Jean-Marie Denis**
**M.F.P. Michelin**
**SGD/LG/PI-F35-Ladoux**
**23, place des Carmes Déchaux**
**63040 Clermont-Ferrand Cedex 09 (FR)**

(56) Documents cités:
• AIAG: "Item Level Radio Frequency Identification (RFID) Standard", AIAG B-11 STANDARD, 7 septembre 2010 (2010-09-07), pages 1-57, XP002691206, ISBN: 9781605341620

**Description**

La présente invention concerne le domaine technique des pneumatiques, en particulier des dispositifs électroniques destinés à être intégrés dans un pneumatique. L'invention s'applique à tout type de pneumatique, aux véhicules de tourisme et plus particulièrement aux pneumatiques pour véhicule industriel comme les camionnettes, les poids-lourd comme les métros, les bus, les engins de transport routier, par exemple les camions, les tracteurs, les remorques, et les véhicules hors la route tels que les engins agricoles ou de génie civil ou bien encore d'autres véhicules de transport ou de manutention.

On connaît déjà dans l'état de la technique un pneumatique portant différentes données inscrites sur des flancs du pneumatique, par exemple par moulage. Ces données comprennent notamment un identifiant du fabricant du pneumatique, des caractéristiques géométriques de pneumatique, par exemple une largeur de boudin, un indice de capacité de charge ou un code vitesse.

Ces données comprennent en particulier un matricule du pneumatique, également appelé numéro de matricule ou numéro de série du pneumatique. Ce matricule est un numéro qui, associé au code d'identification du produit (ou code « CAI »), identifie de façon unique chaque pneumatique. Il comprend différentes formes selon les marques, mais se présente généralement sous forme d'une suite de valeurs alphanumériques, c'est-à-dire de chiffres et/ou de lettres. Par exemple, le matricule permet d'identifier un numéro, une usine, un mois, une année de fabrication du pneumatique, ainsi qu'éventuellement un code utilisé pour le rechapage du pneumatique.

Par ailleurs, on peut également trouver parmi les données inscrites sur le flanc du pneumatique un code appelé couramment « numéro de DOT » ou « indice DOT ». Ce code est utilisé en particulier pour les pneumatiques destinés à l'Amérique du Nord. Il est requis actuellement par la législation américaine (« Département of Transportation ») pour l'exportation du pneumatique aux Etats-Unis et au Canada. Le numéro de DOT comprend plusieurs groupes d'informations, telles que le code dimensionnel du pneumatique, l'usine de fabrication, etc. En particulier, le quatrième groupe d'informations du numéro de DOT se présente généralement sous la forme de quatre chiffres, les deux premiers chiffres indiquant la semaine de fabrication et les deux suivants indiquant l'année de fabrication du pneumatique. Il convient de relever qu'un certain nombre de données figurant dans le matricule ou le code CAI permettent de déduire le numéro de DOT du pneumatique. Toutefois, le numéro de semaine de fabrication, figurant dans le quatrième groupe d'informations du numéro de DOT, ne peut pas se déduire à partir du matricule.

Il se trouve que les inscriptions telles que le matricule ou le numéro de DOT sont soumises aux agressions d'origine naturelle, par exemple le soleil ou la pluie. Elles sont également soumises à l'usure normale du pneumatique ou bien à une usure accélérée en raison, par exemple, de frottements répétés des flancs du pneumatique contre des trottoirs. Enfin, ces inscriptions peuvent être modifiées de façon frauduleuse par moulage d'une nouvelle couche de gomme sur les indications déjà existantes.

La disparition ou la modification des inscriptions, notamment du matricule ou du numéro de DOT, est problématique car il est alors impossible d'identifier le pneumatique, par exemple en vue d'un suivi régulier de ce dernier. Ce problème se pose notamment dans les cas où il est nécessaire de gérer de nombreux pneumatiques, par exemple dans le cas de flottes de véhicules.

L'invention a pour but de permettre une identification fiable du pneumatique.

A cet effet, l'invention a pour objet un procédé de lecture de données, les données étant stockées dans un dispositif électronique intégré dans un pneumatique identifié par un numéro de matricule et un numéro de semaine de fabrication, le dispositif comprenant des moyens de stockage de données, les moyens de stockage comprenant une zone de stockage de données comprenant un intervalle de stockage sous forme de bits, cet intervalle étant appelé intervalle restreint et comprenant un nombre de bits inférieur ou égal à 38, procédé dans lequel :

-    on lit les données stockées dans l'intervalle restreint ; et
-    on décode les données lues de façon à déterminer le numéro de matricule et le numéro de semaine du pneumatique.

Ainsi en stockant les données dans le dispositif électronique intégré au pneumatique, celles-ci sont préservées des agressions d'origine naturelle, de l'usure du pneumatique ou bien d'une modification frauduleuse. En effet, le dispositif est protégé par la gomme du pneumatique dans laquelle il est généralement noyé. En outre, lors de la fabrication du pneumatique, il n'est plus nécessaire de prévoir d'étape de moulage des données sur les flancs du pneumatique. Le procédé de fabrication du pneumatique pourra donc être simplifié.

Par ailleurs, il est particulièrement intéressant de pouvoir stocker les données relatives au numéro de matricule et au numéro de DOT dans un intervalle restreint de stockage présentant un maximum de 38 bits. En effet, on peut ainsi stocker ces données dans une zone normalisée, conforme à un format particulier SGTIN 96 (Sériai Global Trade Item Number tel que décrit dans le document EPC Tag Data Standard version 1.5 de la société GS1). Dans cette zone normalisée, les 8 premiers bits sont réservés a une en-tête de protocole (« Header »), les 3 bits suivants sont réservés à une valeur de filtre (« Filter »), les 3 bits suivants sont réservés à une valeur de partition (« Partition »), les 20 bits suivants sont réservés à un identifiant du fabricant du pneumatique (« Company Identification »), les 24 bits suivants sont réservés à une référence d'objet (« Item Référence ») et les 38 derniers bits sont réservés à un numéro de série du pneumatique (« Sériai Number »). Aussi, on peut donc utiliser ce dernier intervalle normalisé de 38 bits pour y stocker des informations permettant d'en déduire le numéro de matricule et le numéro de DOT du pneumatique.

Ce procédé est particulièrement intéressant à mettre en oeuvre dans le cas où le matricule est composé de 4 lettres et de 5 chiffres, et le numéro de DOT de 4 chiffres. En effet, les inventeurs ont dépassé le préjugé selon lequel ces valeurs alphanumériques sont trop nombreuses pour être codées dans une zone restreinte à 38 bits.

Le procédé peut en outre comporter l'une ou plusieurs des caractéristiques suivantes, prises seules ou en combinaison.

- Le décodage des données lues dans l'intervalle restreint fournit, selon une première étape, des valeurs permettant d'identifier un numéro, une usine, une semaine, un mois, une année de fabrication du pneumatique, et éventuellement un code utilisé pour le rechapage du pneumatique, et permettant de déterminer, selon une seconde étape, le numéro de matricule et une partie du numéro de DOT du pneumatique. En effet, grâce aux valeurs fournit, on peut déduire d'une part le matricule, généralement composé d'une suite de caractères permettant d'identifier le mois, l'usine, l'année, le numéro de fabrication et le code de rechapage. On peut d'autre part déterminer le numéro de DOT généralement composé d'une suite de quatre chiffres permettant d'identifier la semaine et l'année de fabrication du pneumatique.

- Le numéro de fabrication est identifié par 5 chiffres.

- L'usine, le mois et l'année de fabrication sont identifiés par une combinaison de 3 lettres. Ce triplet de lettres fournit ces informations à partir d'un tableau de correspondances dans lequel, selon un mode de réalisation, l'année de fabrication peut prendre 12 valeurs (système glissant), le mois peut également prendre 12 valeurs, et l'usine de fabrication peut prendre 96 valeurs possibles. Ainsi dans le triplet de trois lettres, la première identifie le mois, la seconde l'usine et la troisième l'année de fabrication, sachant qu'une même seconde lettre peut désigner en soi plusieurs usines différentes, mais que, associée à la première et à la troisième lettre, cette seconde lettre ne peut plus désigner qu'une unique usine.

- La semaine de fabrication est identifiée par un chiffre.

- Le code utilisé pour le rechapage du pneumatique est identifié par une lettre.

- La semaine de fabrication est identifiée par un chiffre entier compris entre 1 et 6. Ainsi, plutôt que d'utiliser de façon classique un numéro de 1 à 53 (certaines années ont 53 semaines) pour identifier la semaine de fabrication du pneumatique, les inventeurs ont eu l'idée de réduire le nombre de valeurs possibles pour identifier une semaine, donc de diminuer l'espace nécessaire au stockage de l'information, en utilisant un chiffre compris entre 1 et 6. En effet ce chiffre, associé à un mois de fabrication identifié par ailleurs, permet d'identifier de façon unique la semaine de l'année au cours de laquelle la fabrication a eu lieu. En d'autres termes, pour une année et un mois donnés, 6 semaines sont possibles au maximum (le chiffre 6 est atteint par exemple quand le premier jour du mois est un dimanche pour un mois de 30 ou 31 jours ou quand le premier jour du mois est un samedi pour un mois de 31 jours).

- Le numéro de matricule et la semaine de fabrication du pneumatique sont déterminés à partir de 10 valeurs, à savoir 4 lettres et de 6 chiffres, chacune étant obtenue par le décodage des données lues dans l'intervalle restreint. Ainsi, le procédé propose de reconstituer le numéro de matricule et le numéro de DOT à partir de 10 valeurs alphanumériques uniquement stockées dans l'intervalle restreint.

- On décode les données lues par décomposition du nombre binaire stocké dans les bits de l'intervalle restreint sur une base définie par une famille génératrice libre de vecteurs, cette famille étant distincte d'une famille de polynômes, une famille de polynômes étant définie comme une famille du type $(A^0 ; A^1 ; A^2 ; ... ; A^n)$, n étant un nombre entier positif et A un nombre réel constant. Une telle famille de polynômes peut également être appelée famille de polynômes étagée en degrés, famille dans laquelle les vecteurs sont une succession de puissances d'un unique nombre. Ainsi la base sur laquelle la décomposition est effectuée se distingue d'une base courante telle que la base 1 (système unaire), la base 2 (système binaire), la base 3 (système trinaire), la base 8 (système octal), la base 10 (système décimal), la base 12 (système duodécimal), la base 16 (système hexadécimal), la base 20 (système vigésimal), la base 60 (système sexagésimal) ou encore la base 150 (« base indienne »). En effet, afin d'optimiser au maximum l'espace de stockage disponible, on propose de construire une base dont les vecteurs sont adaptés aux types de valeurs que l'on souhaite stocker. Par exemple, l'un des vecteurs peut être 6 si l'on souhaite que son coefficient

dans la décomposition corresponde à une valeur permettant d'identifier une semaine dans un mois, tandis qu'un autre vecteur de la même base peut être $6*24^2$ (et non $6^3$ si l'on était dans la base 6) si l'on souhaite que son coefficient dans la décomposition du nombre binaire corresponde à une valeur permettant d'identifier un lettre. En d'autres termes, le nombre binaire N décomposé peut prendre la forme suivante : $N = \sum c_i X_i$, i étant un entier compris entre 0 et n, $X_i$ étant la suite des vecteurs de la famille génératrice de la base et étant défini de sorte que $X_i \neq A^i$ avec A constant quelle que soit la valeur de i, et $c_i$ étant par ailleurs la suite des coefficients de la décomposition du nombre binaire N sur la base définie par la famille $(X_0 ; X_i ; ... ; X_n)$. La décomposition sur cette base est unique, c'est-à-dire que pour tout nombre N, il existe une unique suite de coefficients $c_i$ permettant de le décomposer.

- On décode les données lues par décomposition du nombre binaire stocké dans les bits de l'intervalle restreint sur une base définie par une famille génératrice libre de vecteurs, un ou plusieurs des coefficients de décomposition dans la base correspondant à une valeur permettant d'identifier un ou plusieurs membres du groupe comprenant un numéro, une usine, une semaine, un mois, une année de fabrication du pneumatique et un code utilisé pour le rechapage du pneumatique.

- La base a une dimension égale à 6, la décomposition du nombre binaire stocké dans l'intervalle restreint fournissant six coefficients $(c_0 ; c_1 ; c_2 ; c_3 ; c_4 ; c_5)$, dans lesquels :

  • le premier $(c_0)$ coefficient de la décomposition permet d'identifier un numéro de semaine de fabrication du pneumatique,
  • le second $(c_1)$ coefficient de la décomposition permet d'identifier une lettre correspondant à un code utilisé pour le rechapage du pneumatique,
  • les troisième, quatrième et cinquième $(c_2 ; c_3 ; c_4)$ coefficients de la décomposition permettent d'identifier trois lettres indiquant ensemble un mois, une usine et une année de fabrication du pneumatique,
  • le sixième $(c_5)$ coefficient de la décomposition permet d'identifier un numéro de fabrication du pneumatique.

- On décode les données lues par décomposition du nombre binaire stocké dans l'intervalle restreint sur la base définie par la famille génératrice libre suivante : $(1 ; 6^1; 6*24^1 ; 6*24^2 ; 6*24^3 ; 6*24^4)$.

- La zone de stockage comprend, outre l'intervalle restreint, au moins un intervalle de bits réservé à au moins un élément choisi parmi une en-tête de protocole, une valeur de filtre, une valeur de partition, un identifiant du fabricant du pneumatique et une référence d'objet.

- La zone de stockage est normalisée, de sorte que le nombre de bits stocké dans cette zone est limité par une norme, les moyens de stockage comprenant également une zone de stockage de données, dite « zone libre ». Cette zone libre, non normalisée, n'est conforme à aucun format particulier. Elle est généralement utilisée par les constructeurs automobiles pour stocker des informations autres que celles relatives directement au pneumatique. Il est donc important que le constructeur automobile puisse disposer de tout l'espace de cette zone non normalisée pour y stocker le maximum de données.

L'invention a encore pour objet un procédé d'écriture de données dans un dispositif électronique intégré dans un pneumatique permettant une lecture ultérieure des données par mise en oeuvre d'un procédé de lecture tel que présenté ci-dessus, au cours duquel :

- on traduit le numéro de matricule et le numéro de semaine de fabrication du pneumatique en une suite de valeurs alphanumériques,
- on code chaque valeur selon une première étape de façon à obtenir une suite de nombres entiers appelés coefficients $(c_0 ; c_1 ; c_2 ; c_3 ; c_4 ; c_5)$,
- on calcule un nombre en multipliant chaque coefficient par un vecteur $(X_0 ; X_1 ; X_2\ X_3\ X_4\ X_5)$ correspondant d'une base arithmétique libre prédéterminée,
- on code ce nombre en bits,
- on écrit ce nombre en bits dans l'intervalle restreint.

L'invention a pour autre objet un programme d'ordinateur comprenant des instructions de code pour commander l'exécution des étapes d'un procédé de lecture ou d'un procédé d'écriture tel que présenté ci-dessus, lorsqu'il est exécuté sur un ordinateur.

En comparaison d'une solution dans laquelle les informations seraient stockées dans deux zones différentes du dispositif électronique, le procédé de lecture et d'écriture selon l'invention a l'avantage de simplifier le procédé industriel d'écriture des données dans le dispositif électronique, en effet les temps d'écriture sont sensiblement raccourcis et par conséquent influent beaucoup moins sur le processus de fabrication des pneumatiques.

Ce procédé présente aussi un avantage pour les utilisateurs des pneumatiques, en effet lire dans une seule zone l'ensemble des données raccourcit les temps de lecture et ainsi facilite la gestion de flottes de pneumatiques.

L'invention a encore pour objet une unité de lecture de données stockées sous forme de bits dans un dispositif électronique intégré dans un pneumatique pour la mise en oeuvre d'un procédé tel que défini ci-dessus, cette unité comprenant des moyens de lecture de données stockées dans le dispositif électronique et des moyens de décodage des bits lus de façon à fournir le numéro de matricule et le numéro de semaine de fabrication du pneumatique.

Par ailleurs, on notera que les procédés de lecture et d'écriture décrits ci-dessus peuvent être utilisés pour des données se trouvant dans une autre zone de stockage qu'un intervalle de moins de 38 bits, et dans le but de déterminer d'autres informations qu'un numéro de matricule et un numéro de semaine de fabrication de pneumatique. En effet, ces procédés peuvent être appliqués pour coder ou décoder tout type d'informations alphanumériques sur une un intervalle restreint, pour lequel on est limité quant à la taille de stockage des données.

A cet effet, on peut proposer de façon plus générale un procédé d'écriture de données sous forme de bits dans une zone de stockage appelée zone restreinte, les données se présentant sous forme d'une suite de valeurs alphanumériques, au cours duquel :

- on code selon une première étape chaque valeur alphanumérique de façon à obtenir une suite de nombres entiers appelés coefficients,
- on calcule un nombre, appelé nombre final, en multipliant chaque coefficient par un vecteur correspondant d'une base prédéterminée définie par une famille génératrice libre de vecteurs, cette famille étant distincte d'une famille de polynômes, une famille de polynômes étant définie comme une famille du type $(A^0 ; A^1 ; A^2 ; ... ; A^n)$, n étant un nombre entier positif et A un nombre réel constant,
- on code ce nombre final en bits,
- on écrit ce nombre final en bits dans la zone restreinte.

On peut également proposer un procédé de lecture de données stockées dans une zone de stockage appelée zone restreinte, les données se présentant sous forme de bits, au cours duquel :

- on lit un nombre binaire à partir des données sous forme de bits,
- on effectue une première étape de décodage par décomposition du nombre binaire sur une base définie par une famille génératrice libre de vecteurs, cette base étant distincte d'une base courante, cette famille étant distincte d'une famille de polynômes, une famille de polynômes étant définie comme une famille du type $(A^0 ; A^1 ; A^2 ; ...; A^n)$, n étant un nombre entier positif et A un nombre réel constant, de sorte que l'on obtient des coefficients de décomposition du nombre binaire sur la base,
- pour l'un au moins des coefficients de décomposition, on effectue une seconde étape de décodage, de façon que l'ensemble des coefficients de décomposition, une fois juxtaposés, devienne une suite de valeurs alphanumériques, comprenant au moins une lettre.

On comprend que la base de décomposition est la même que celle présentée précédemment dans la présente description.

L'invention sera mieux comprise à la lecture de la description qui va suivre, donnée uniquement à titre d'exemple non limitatif et faite en se référant aux dessins dans lesquels :

- la figure 1 illustre un dispositif électronique d'un pneumatique;
- la figure 2 est une représentation schématique de moyens de stockage de données du dispositif de la figure 1,
- la figure 3 est un diagramme illustrant un procédé de lecture de données stockées dans le dispositif de la figure 1, et
- la figure 4 est un diagramme illustrant un procédé d'écriture de données dans le dispositif de la figure 1.

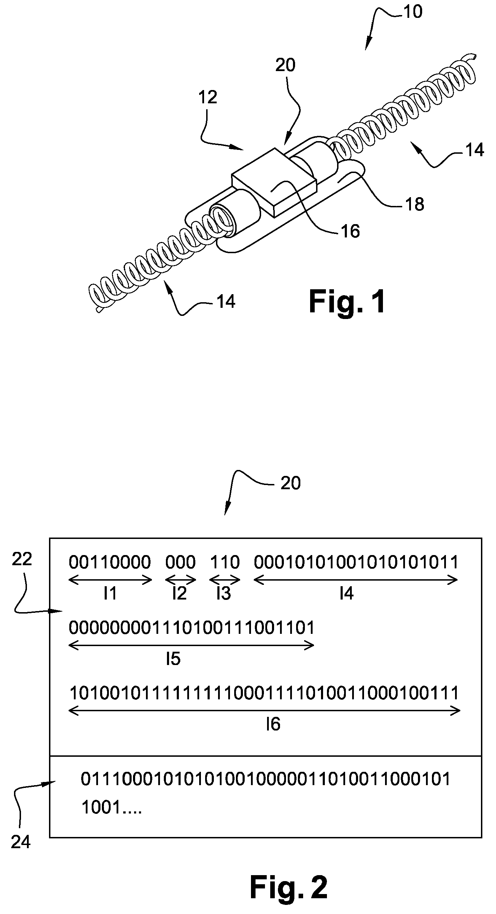

On a représenté sur la figure 1 un dispositif électronique selon un mode de réalisation, désigné par la référence générale 10. Le dispositif 10 comprend un organe électronique 12 ainsi que deux antennes 14 formant dipôle. L'organe électronique 12 comprend une puce 16 de type RFID (Radio Frequency Identification), également appelée « tag RFID », fixée sur un support 18. Chaque antenne 14 comprend un fil métallique, présentant ici une forme hélicoïdale, et est associée à la puce 16 de façon à permettre d'avoir une communication par ondes radio avec un émetteur-récepteur. Le dispositif 10 est introduit dans le pneumatique au cours de sa fabrication.

L'organe électronique 12, plus précisément la puce 16, comprend des moyens 20 de stockage de données, illustrés de façon schématique sur la figure 2. Les moyens 20 comprennent d'une part une zone normalisée 22 de stockage de données, destinée notamment à l'identification du pneumatique sur lequel est rapporté le dispositif 10, et d'autre part une zone non normalisée 24 de stockage de données, appelée « User Memory » (zone mémoire de l'utilisateur).

La zone normalisée 22 est définie par un standard ou une norme, international(e) ou national(e). Dans cet exemple, la zone 22 est une zone appelée U2, conforme au format particulier SGTIN 96. Ainsi, les données de la zone normalisée 22 sont stockées sur 96 bits. Plus précisément, la zone normalisée 22 comprend des intervalles réservés I1 à I6 de données stockées sous forme de bits. Chaque intervalle I1-I6 est respectivement réservé à un en-tête de protocole appelée « Header », une valeur de filtre appelée « Filter », une valeur de partition appelée « Partition », un identifiant du fabricant du pneumatique appelé « Company Identification », une référence d'objet appelée « Item Référence » et un numéro de série appelé « Serial Number». Chaque intervalle I1-I6 comprend respectivement 8 bits, 3 bits, 3 bits, 20 bits, 24 bits et 38 bits.

Ainsi, l'intervalle I6 correspond à un intervalle de 38 bits sur lequel l'on souhaite stocker des données permettant de déterminer le numéro de matricule et le numéro de semaine de fabrication du pneumatique, donc le quatrième groupe du numéro de DOT. Ceci est rendu possible grâce à un procédé de lecture ou d'écriture de données décrits dans la suite, en se référant aux deux exemples suivants, la figure 2 illustrant le stockage des données relatives à l'exemple 2.

Dans la présente demande, on entend par « chiffre » un nombre entier positif compris entre 0 et 9, par « nombre » une combinaison de un ou plusieurs chiffres, par « valeur alphanumérique » un chiffre ou une lettre de l'alphabet, et par « numéro » une suite de valeurs alphanumériques. Par exemple un « numéro de matricule » peut prendre la forme ZZC89536T.

**Exemple 1 :**

Données stockées dans l'intervalle I6 :

$$N = 10100101111111100011110100110001001111$$

Numéro de matricule déterminé après décodage : ZZC89536T.
Partie du numéro de DOT déterminée après décodage : 0911 (donc semaine 9).

**Exemple 2 :**

Données stockées dans l'intervalle 16 :

$$N = 11001111101001001101110101011010011000$$

Numéro de matricule déterminé après décodage : OLY56000R.
Partie du numéro de DOT déterminée après décodage : 1410 (donc semaine 14).

Comme on peut le voir ci-dessus, le numéro de matricule selon les exemples est composé des informations suivantes :

- Une combinaison de trois lettres permettant d'identifier l'usine, le mois et l'année de fabrication, grâce à une table de correspondance non détaillée ici. Ainsi dans l'exemple 1, le triplet de lettres ZZC signifie que le pneumatique a été fabriqué en février, dans l'usine de Zuen, pendant l'année 2011.
- Cinq chiffres permettant d'identifier le numéro de fabrication du pneumatique, compris entre 1 et 99999. Dans l'exemple 1, le numéro de fabrication est 89536.
- Une lettre correspondant à un code utilisé pour le rechapage du pneumatique, à savoir T dans l'exemple 1.

Dans ces exemples, chacune des lettres peut prendre 24 valeurs possibles (car 2 lettres de l'alphabet ne sont pas utilisées). Toutefois, chaque lettre pourrait prendre plus ou moins que 24 valeurs, avec un maximum de 26 valeurs possibles.

Par ailleurs, la partie du numéro de DOT que l'on souhaite déterminer à partir des données de l'intervalle I6 est composée des informations suivantes :

- Deux chiffres pour indiquer la semaine de fabrication, à savoir la 9ème semaine de l'année pour l'exemple 1.
- Deux chiffres pour indiquer l'année de fabrication, à savoir 2011 pour l'exemple 1. Cette information relative à l'année est la même que celle donnée dans le numéro de matricule.

On comprend à partir des informations ci-dessus que dans l'exemple 2, le triplet de lettres OLY signifie d'après des tables de correspondance que le pneumatique a été fabriqué en avril dans l'usine de Aranda pendant l'année 2010, que le numéro de fabrication est 56000, que le code utilisé pour le rechapage est R, et que le numéro de semaine est 14.

Ainsi, pour être capable de reconstituer un matricule et le quatrième groupe du numéro de DOT à partir des données stockées dans l'intervalle 16, il faudrait pouvoir coder au total dans cet intervalle : 4 lettres et 7 chiffres (5 pour le numéro de fabrication et 2 pour le numéro de semaine, l'année et le mois étant fournis par le triplet de lettres). Or, une lettre de l'alphabet est représentée, dans les présents exemples, par un nombre compris entre 1 et 24. Aussi, si l'on souhaitait coder ces informations de manière classique en langage binaire, chaque lettre devrait être codée sur 5 bits (5 bits permettent de coder $2^4=32$ valeurs possibles, 4 bits ne seraient pas suffisants puisque $2^3=16$ possibilités uniquement). Par ailleurs, le nombre de semaines allant de 1 à 53, ce nombre de semaines serait codé sur 6 bits ($2^5=64$), et le numéro de fabrication, allant de 1 à 99999, serait codé sur 17 bits.

Au total, si l'on souhaitait inscrire les informations en binaire de façon classique, il serait donc nécessaire de prévoir un intervalle de 43 bits (5*4+6+17= 43) pour être capable d'en déduire ensuite le matricule et le numéro de DOT du pneumatique. Comme la zone normalisée 22 ne comprend que 38 bits, ceci n'est pas possible. On propose donc de coder les informations de façon différente.

Tout d'abord, plutôt que de désigner le numéro de la semaine par un chiffre compris entre 1 et 53, les inventeurs ont relevé que pour une année donnée, à un mois donné, il y a au maximum six semaines possibles. Ainsi, comme le triplet de lettres dans le matricule permet d'indiquer le mois de fabrication, le numéro de semaine peut être identifié uniquement par un chiffre compris entre 1 et 6, indiquant le numéro de la semaine sur ce mois, plutôt que le numéro de la semaine dans l'année.

Par ailleurs, comme il n'est pas possible de coder l'ensemble des informations ci-dessus selon une décomposition binaire, on propose ici de créer une base B permettant de coder les informations de façon à limiter la perte de place dans le codage, comme développé ci-dessous. En effet, on constate que lorsque l'on code une lettre sur 5 bits alors que l'on n'utilise que 24 valeurs, les valeurs possibles et non utilisées font perdre de la place de stockage (32 valeurs possibles sur 5 bits alors que l'on n'en utilise que 24).

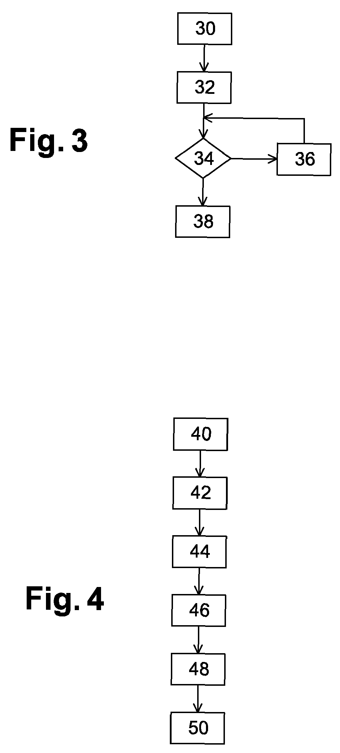

Le procédé de lecture des données ainsi codées et stockées dans l'intervalle restreint I6 va être décrit, en référence à la figure 3.

Le procédé commence par une étape 30 de lecture des données se trouvant dans les 38 bits de l'intervalle restreint I6. Dans le cas de l'exemple 1, on lit donc le nombre binaire N = 10100101111111110001111010011000100111.

L'étape 30 est suivie par une étape 32 de décomposition de ce nombre binaire sur la base B. Ainsi, pour décoder les données stockées dans l'intervalle I6, plutôt que d'utiliser la base courante 2 du codage binaire, à savoir la base suivante ($2^0$ ; $2^1$ ; $2^2$ ; $2^3$ ; ... ; $2^{38}$), on propose un décodage utilisant en outre une base définie par une famille génératrice libre de vecteurs ($X_0$ ; $X_1$ ; $X_2$ ; $X_3$ ; $X_4$ ; $X_5$), spécifiquement choisis à partir du type de valeurs alphanumériques composant les informations nécessaires à la détermination du matricule et du numéro de semaine. Ainsi, dans le format décrit ci-dessus d'informations requises, les valeurs requises pour déterminer le matricule et le numéro de DOT sont : un chiffre compris entre 1 et 6 (numéro de semaine dans le mois), quatre nombres compris entre un et 24 (quatre lettres), et cinq chiffres. On choisit les vecteurs $X_0=1$ ; $X_1=6$ ; $X_2=6*24$ ; $X_3=6*24^2$ ; $X_4=6*243$ ; $X_5=6*244$, si bien que la base arithmétique que l'on propose d'utiliser est la base B suivante : B = ($6^0$ ; $6^1$ ; $6*24^1$ ; $6*24^2$ ; $6*24^3$ ; $6*24^4$). Grâce à une base ainsi définie, on peut décomposer les données stockées en binaire dans l'intervalle I6 de façon que le nombre binaire N, une fois décomposé sur cette base, fournit des coefficients de décomposition ($c_0$ ; $C_1$ ; $c_2$ ; $c_3$ ; $c_4$ ; $c_5$) permettant de déterminer respectivement un chiffre $c_0$ compris entre 1 et 6, quatre lettres déduites des coefficients $c_1$ ; $c_2$ ; $c_3$ ; $c_4$ , et un nombre $c_5$ compris entre 1 et 99999, permettant de fournir par la suite un numéro de semaine, une lettre de code de rechapage du pneumatique, une année, une usine et un mois de fabrication, et enfin un numéro de fabrication du pneumatique. On comprend que la base B utilisée est définie par des vecteurs qui ne sont pas une famille de polynômes, c'est-à-dire qu'ils ne sont pas une succession de puissances d'un unique nombre, et se distingue ainsi d'une base courante telle que la base 2 du système binaire, dans laquelle les vecteurs sont une succession de puissances du chiffre 2, à savoir ($2^0$ ; $2^1$ ; $2^2$ ; $2^3$ ; ... ; $2^n$), la base huit du système octal dans laquelle les vecteurs sont une succession de puissance du chiffre huit ($8^0$ ; $8^1$ ; $8^2$ ; $8^3$ ; ... ; $8^n$), etc. En effet, les vecteurs de la base B sont en premier lieu le vecteur 1 (ou 6), puis cinq puissances successives du nombre 24, multiplié à chaque fois par le chiffre 6 ($6*24^0$ ; $6*24^1$ ; $6*24^2$ ; $6*24^3$ ; $6*24^4$). Cette base B à une dimension égale à 6, correspondant aux six informations que l'on souhaite coder, à savoir quatre lettres, un chiffre compris entre 1 et 6 et un numéro de fabrication compris entre 1 et 9999.

Dans le cas de l'exemple 1, les données stockées dans l'intervalle 16 sont les suivantes : 10100101111111110001111010011000100111. Ce nombre binaire correspond au nombre décimal 178237449767, qui peut être décomposé de la façon suivante sur la base B : N = 178237449767 = $\sum c_i X_i$ = **5**$*6^0$ + **19**$*6^1$ + **3**$*6*24^1$ + **0**$*6*24^2$ + **1**$*6*24^3$ + **89537**$*(6*24^4)$. En d'autres termes, les coefficients de décomposition obtenus sur cette base sont les

suivants : $(c_0 ; c_1 ; c_2 ; c_3 ; c_4 ; c_5) = (5 ; 19 ; 3 ; 0 ; 1 ; 89537)$. Cette décomposition est unique, du fait que la base B est une base libre.

Ainsi, l'étape de décomposition 32 fournit les coefficients $(c_0 ; c_1 ; c_2 ; c_3 ; c_4 ; c_5)$, qui vont pouvoir être transformés en des valeurs permettant de déterminer le matricule et le numéro de semaine. L'étape 32 est toutefois suivie d'une étape 34 de test sur la valeur des coefficients $(c_0 ; c_1 ; c_2 ; c_3 ; c_4 ; c_5)$. En effet, un correctif est à effectuer dans le cas où l'un des coefficients $c_i$ vaut 0, du fait que la valeur 0 ne correspond pas à une lettre ou à un nombre dans les tables de correspondance permettant d'indiquer une lettre, un numéro de semaine ou un numéro de fabrication. L'étape de test 34 consiste à vérifier si l'un des coefficients $c_i$ a une valeur égale à 0.

Si le résultat du test 34 est positif, c'est-à-dire si l'un des coefficients est nul, on passe alors à une étape 36 de correction, au cours de laquelle on modifie ce coefficient $c_i$ , en lui attribuant la valeur 24, ainsi que le coefficient $C_{i+1}$, en lui ôtant la valeur 1. Dans le cas de l'exemple 1 ci-dessus, la valeur 0 donnée au quatrième coefficient $c_3$ (vecteur $6*24^2$) ne peut être considérée, c'est pourquoi on considère que ce coefficient $c_3$ vaut 24 et que le coefficient $c_4$ du vecteur qui suit ($6*24^3$) doit être diminué de 1 et devient donc 0.

A l'issue de l'étape de correction 36, on repasse à l'étape 34 de test sur la présence de la valeur 0 parmi les coefficients $(c_0 ; c_1 ; c_2 ; c_3 ; c_4 ; c_5)$. Dans le cas de l'exemple 1, on a désormais le coefficient $c_4$ qui vaut 0. La même étape 36 de correction doit donc être effectuée : on attribue la valeur 24 à ce nouveau coefficient $c_4$ (du vecteur $6*24^3$) et on diminue de 1 le coefficient $c_5$ du vecteur suivant (vecteur $6*24^4$), qui devient donc 89536. On repasse ensuite à l'étape 34 de test.

Lorsque le résultat du test 34 est négatif, c'est-à-dire lorsqu'aucun des coefficients n'est nul, on passe à une étape 38 de détermination du numéro de matricule et du numéro de semaine, de la façon suivante.

Après les éventuelles étapes de correction 36, les coefficients de la décomposition sont devenus les suivants : $(c'_0 ; c'_1 ; c'_2 ; c'_3 ; c'_4 ; c'_5) = (5 ; 19 ; 3 ; 24 ; 24 ; 89536)$. Ces coefficients de décomposition permettent d'identifier les informations suivantes :

- le premier coefficient $c_0$, devenu $c'_0$ à l'issue des étapes 34, 36, indique le numéro de semaine de fabrication du pneumatique ; dans le cas présent, il s'agit de la cinquième semaine du mois déterminé par la suite,
- le second coefficient $c_1$, devenu $c'_1$, permet d'identifier une lettre correspondant à un code utilisé pour le rechapage du pneumatique, ici la lettre ayant le numéro 19 dans une table de correspondance, à savoir la lettre T,
- les troisième, quatrième et cinquième coefficients $c_2$ ; $c_3$ ; $c_4$, devenus $c'_2$ ; $c'_3$ ; $c'_4$, permettent d'identifier trois lettres indiquant ensemble un mois, une usine et une année de fabrication du pneumatique, ici les lettres ayant les numéros 3, 24, 24 dans un tableau de correspondance, à savoir les lettres C, Z, Z,
- le sixième coefficient c5, devenu $c'_5$, permet d'identifier un numéro de fabrication du pneumatique, à savoir 89536 dans l'exemple 1.

Ainsi, l'étape 38 permet de déterminer le numéro de matricule ZZC89536T, et le numéro de semaine sur l'année, 09. Ce numéro de semaine est obtenu à partir du numéro 5 indiquant qu'il s'agit de la cinquième semaine du mois et du triplet de lettres ZZC qui indique que l'année de fabrication est 2011 et le mois est février, la cinquième semaine de février correspondant à la semaine 09 de l'année 2011. On peut en déduire ainsi le quatrième groupe du numéro de DOT : 0911.

Le procédé d'écriture des données dans l'intervalle restreint I6 va à présent être décrit, en référence à la figure 4 et à l'exemple 2.

Au cours ou à l'issue de la fabrication du pneumatique, on procède tout d'abord à une étape 40 de détermination du numéro de matricule et de la semaine de fabrication. Selon l'exemple 2, le numéro de matricule, déterminé selon l'usine, le mois, l'année, le numéro de fabrication et le code de rechapage est : OLY56000R. La semaine de fabrication 14.

L'étape 40 est suivie d'une étape 42 au cours de laquelle on traduit le numéro de matricule et le numéro de semaine de fabrication du pneumatique en une suite de valeurs alphanumériques, à savoir (2 ; R ; Y ; L ; O ; 56000). Lors de cette étape de traduction, on ordonne les valeurs alphanumériques de la façon suivante : (numéro de semaine simplifié ; code de rechapage ; 3ème lettre du triplet de lettres ; 2ème lettre du triplet de lettres, 1ère lettre du triplet de lettre ; numéro de fabrication). On notera que le numéro de semaine, initialement 14, est traduit en un chiffre compris entre 1 et 6, appelé « numéro de semaine simplifié », en déterminant à quelle semaine du mois d'avril correspond la 14ème semaine de l'année 2010. Il s'agit de la deuxième semaine d'avril, d'où le chiffre 2.

L'étape 42 est suivie d'une première étape 44 de codage de chaque valeur de la suite (2 ; R ; Y ; L ; O ; 56000) de façon à obtenir une suite de coefficients sous forme de nombres entiers $(c_0 ; c_1 ; c_2 ; c_3 ; c_4 ; c_5) = (2 ; 17 ; 23 ; 12 ; 15 ; 56000)$. Au cours de cette étape 42, on a transformé chacune des lettres de la suite précédentes par un chiffre compris entre 1 et 24 à partir de la table de correspondance. Les coefficients $(c_0 ; c_1 ; c_2 ; c_3 ; c_4 ; c_5)$ ainsi déterminés constituent les coefficients de décomposition du futur nombre binaire sur la base B décrite précédemment.

A l'issue du codage 44, on procède à une étape 46 au cours de laquelle on calcule un nombre N en multipliant chaque coefficient $(c_0 ; c_1 ; c_2 ; c_3 ; c_4 ; c_5) = (2 ; 17 ; 23 ; 12 ; 15 ; 56000)$ par un vecteur correspondant ($6 ; 6^1 ; 6*24^1 ;$

$6*24^2$ ; $6*24^3$ ; $6*24^4$) de la famille définissant base B. On obtient ainsi :

$$N = \mathbf{2}*(1) + \mathbf{17}*(6) + \mathbf{23}*(6*24) + \mathbf{12}*(6*24*24) + \mathbf{15}*(6*24*24*24) + \mathbf{56000}*(6*24*24*24*24)$$

Soit N = 111478025048.

L'étape 46 est suivie d'une seconde étape 48 de codage du nombre N calculé en bits, ce qui fournit le nombre binaire suivant :

$$N = 1100111110100100110111010101101011000.$$

Une fois ce nombre N obtenu en bit, on l'écrit, au cours d'une étape 50, dans l'intervalle restreint I6.

A l'issue de ce procédé d'écriture, on dispose ainsi de données stockées dans l'intervalle restreint I6 de sorte qu'il est possible de déterminer le numéro de matricule et le numéro de semaine du pneumatique, par mise en oeuvre du procédé de lecture décrit précédemment.

On notera que tout ou partie des procédés décrits ci-dessus pourra être mise en oeuvre par le biais d'instructions de code pour commander l'exécution des étapes du procédé lorsque le procédé est exécuté sur un ordinateur. Les instructions pourront émaner de programmes d'ordinateur enregistrés sur un support d'enregistrement de données par exemple du type à disque dur ou à mémoire flash, CD ou DVD. On pourra prévoir de mettre un tel programme à disposition en vue de son téléchargement sur un réseau de télécommunication, de préférence sans fil tel que le réseau Internet ou un réseau Intranet. Des mises à jour du programme pourront ainsi être envoyées par ce réseau aux ordinateurs connectés au réseau.

L'organe électronique pourra être du type passif, c'est-à-dire apte à communiquer des données comprises dans la puce électronique à l'unité de lecture ou du type actif, c'est-à-dire apte à recevoir des données émises par un capteur afin de les communiquer à l'unité de lecture. Un tel organe actif peut comprendre notamment un microprocesseur ainsi qu'une mémoire. D'autres tableaux de correspondance entre chiffres et lettres pourront être utilisés.

Parmi les avantages de l'invention, on comprend que l'on peut stocker un maximum d'informations relatives à l'identification du pneumatique dans l'intervalle I6, bien que cet intervalle soit de taille très limitée.

## Revendications

**1.** Procédé de lecture de données, dans lequel les données sont stockées dans un dispositif électronique (10) intégré dans un pneumatique identifié par un numéro de matricule et un numéro de semaine de fabrication, le dispositif (10) comprenant des moyens (20) de stockage de données, les moyens de stockage (20) comprenant une zone (22) de stockage de données comprenant un intervalle (I6) de stockage sous forme de bits, **caractérisé en ce que** cet intervalle étant appelé intervalle restreint comprend un nombre de bits inférieur ou égal à 38, procédé dans lequel :

- on lit (30) les données stockées dans l'intervalle restreint (I6) ; et
- on décode les données lues de façon à déterminer (38) le numéro de matricule et le numéro de semaine du pneumatique.

**2.** Procédé selon la revendication 1, au cours duquel le décodage des données lues dans l'intervalle restreint fournit, selon une première étape (32), des valeurs ($c_0$ ; $C_1$ ; $c_2$ ; $c_3$ ; $c_4$ ; $c_5$) permettant d'identifier un numéro, une usine, une semaine, un mois, une année de fabrication du pneumatique, et éventuellement un code utilisé pour le rechapage du pneumatique, et permettant de déterminer, selon une seconde étape (38), le numéro de matricule et une partie du numéro de DOT du pneumatique.

**3.** Procédé selon la revendication précédente, dans lequel

- le numéro de fabrication est identifié par 5 chiffres, et/ou
- l'usine, le mois et l'année de fabrication sont identifiés par une combinaison de 3 lettres, et/ou
- la semaine de fabrication est identifiée par un chiffre, et/ou
- le code utilisé pour le rechapage du pneumatique est identifié par une lettre.

**4.** Procédé selon l'une quelconque des revendications précédentes, dans lequel la semaine de fabrication est identifiée par un chiffre entier compris entre 1 et 6.

**5.** Procédé selon l'une quelconque des revendications précédentes, au cours duquel le numéro de matricule et la semaine de fabrication du pneumatique sont déterminés à partir de 10 valeurs (2 ; R ; Y ; L ; O ; 56000), à savoir 4 lettres et de 6 chiffres, chacune étant obtenue par le décodage des données lues dans l'intervalle restreint (I6).

**6.** Procédé selon l'une quelconque des revendications précédentes, au cours duquel on décode les données lues par décomposition du nombre binaire (N) stocké dans les bits de l'intervalle restreint sur une base (B) définie par une famille génératrice libre de vecteurs, cette famille étant distincte d'une famille de polynômes, une famille de polynômes étant définie comme une famille du type $(A^0 ; A^1 ; A^2 ; ... ; N^n)$, n étant un nombre entier positif et A un nombre réel constant.

**7.** Procédé selon l'une quelconque des revendications précédentes, au cours duquel on décode les données lues par décomposition du nombre binaire stocké dans les bits de l'intervalle restreint sur une base (B) définie par une famille génératrice libre de vecteurs $(X_0 ; X_1 ; ... ; X_n)$, un ou plusieurs des coefficients $(c_i)$ de décomposition dans la base correspondant à une valeur permettant d'identifier un ou plusieurs membres du groupe comprenant un numéro, une usine, une semaine, un mois, une année de fabrication du pneumatique et un code utilisé pour le rechapage du pneumatique.

**8.** Procédé selon la revendication précédente, au cours duquel la base arithmétique libre (B) a une dimension égale à 6, la décomposition du nombre binaire stocké dans l'intervalle restreint fournissant six coefficients $(c_0 ; C_1 ; c_2 ; c_3 ; c_4 ; c_5)$, dans lesquels :

- le premier $(c_0)$ coefficient de la décomposition permet d'identifier un numéro de semaine de fabrication du pneumatique,
- le second $(c_1)$ coefficient de la décomposition permet d'identifier une lettre correspondant à un code utilisé pour le rechapage du pneumatique,
- les troisième, quatrième et cinquième $(c_2 ; c_3 ; c_4)$ coefficients de la décomposition permettent d'identifier trois lettres indiquant ensemble un mois, une usine et une année de fabrication du pneumatique,
- le sixième $(c_5)$ coefficient de la décomposition permet d'identifier un numéro de fabrication du pneumatique.

**9.** Procédé selon la revendication précédente, au cours duquel on décode les données lues par décomposition du nombre binaire stocké dans l'intervalle restreint sur la base (B) définie par la famille génératrice libre suivante : $(1 ; 6^1 ; 6*24^1 ; 6*24^2 ; 6*24^3 ; 6*24^4)$.

**10.** Procédé selon l'une quelconque des revendications précédentes, au cours duquel la zone de stockage (22) comprend, outre l'intervalle restreint (I6), au moins un intervalle (I1, I2, I3, I4, I5) de bits réservé à au moins un élément choisi parmi une en-tête de protocole, une valeur de filtre, une valeur de partition, un identifiant du fabricant du pneumatique et une référence d'objet.

**11.** Procédé selon l'une quelconque des revendications précédentes, dans lequel la zone de stockage (22) est normalisée, de sorte que le nombre de bits stocké dans cette zone est limité par une norme, les moyens de stockage (20) comprenant également une zone (24) de stockage de données, dite « zone libre ».

**12.** Procédé d'écriture de données dans un dispositif électronique (10) intégré dans un pneumatique permettant une lecture ultérieure des données par mise en oeuvre d'un procédé de lecture selon l'une quelconque des revendications précédentes, au cours duquel :

- on traduit le numéro de matricule et le numéro de semaine de fabrication du pneumatique en une suite de valeurs alphanumériques,
- on code chaque valeur selon une première étape de façon à obtenir une suite de nombres entiers appelés coefficients $(c_0 ; C_1 ; c_2 ; c_3 ; c_4 ; c_5)$,
- on calcule un nombre en multipliant chaque coefficient $(c_0 ; c_1 ; c_2 ; c_3 ; c_4 ; c_5)$ par un vecteur $(X_0 ; X_1 ; X_2 ; X_3 ; X_4 ; X_5)$ correspondant d'une base arithmétique libre prédéterminée,
- on code ce nombre (N) en bits,
- on écrit ce nombre (N) en bits dans l'intervalle restreint (I6).

**13.** Programme d'ordinateur, **caractérisé en ce qu'**il comprend des instructions de code pour commander l'exécution des étapes d'un procédé de lecture selon l'une quelconque des revendications 1 à 11 ou d'un procédé d'écriture selon la revendication 12 lorsqu'il est exécuté sur un ordinateur.

**14.** Unité de lecture de données stockées sous forme de bits dans un dispositif électronique (10) intégré dans un pneumatique pour la mise en oeuvre d'un procédé de lecture selon l'une quelconque des revendications 1 à 11, **caractérisée en ce qu'**elle comprend des moyens de lecture de données stockées dans le dispositif électronique et des moyens de décodage du bits lus de façon à fournir le numéro de matricule et le numéro de semaine de fabrication du pneumatique.

**Patentansprüche**

**1.** Datenleseverfahren, bei dem die Daten in einer elektronischen Vorrichtung (10) gespeichert sind, die in einen Reifen eingebaut ist, der durch eine Matrikelnummer und eine Herstellungswochennummer bestimmt wird, wobei die Vorrichtung (10) Datenspeichereinrichtungen (20) enthält, wobei die Speichereinrichtungen (20) einen Datenspeicherbereich (22) enthalten, der ein Speicherintervall (16) in Form von Bits enthält, **dadurch gekennzeichnet, dass** dieses beschränktes Intervall genannte Intervall eine Zahl von Bits weniger als oder gleich 38 enthält, Verfahren, bei dem:

- die im beschränkten Intervall (16) gespeicherten Daten gelesen werden (30); und
- die gelesenen Daten decodiert werden, um die Matrikelnummer und die Wochennummer des Luftreifens zu ermitteln (38).

**2.** Verfahren nach Anspruch 1, während dessen die Decodierung der im beschränkten Intervall gelesenen Daten gemäß einem ersten Schritt (32) Werte ($c_0$; $c_1$; $c_2$; $c_3$; $c_4$; $c_5$) liefert, die es ermöglichen, eine Nummer, eine Fabrik, eine Woche, einen Monat, ein Jahr der Herstellung des Luftreifens und ggf. einen für die Runderneuerung des Luftreifens verwendeten Code zu bestimmen, und es gemäß einem zweiten Schritt (38) ermöglichen, die Matrikelnummer und einen Teil der DOT-Nummer des Luftreifens zu ermitteln.

**3.** Verfahren nach dem vorhergehenden Anspruch, wobei

- die Herstellungsnummer durch 5 Ziffern bestimmt wird und/oder
- die Fabrik, der Monat und das Jahr der Herstellung durch eine Kombination von 3 Buchstaben bestimmt werden, und/oder
- die Herstellungswoche durch eine Ziffer bestimmt wird, und/oder
- der für die Runderneuerung des Luftreifens verwendet Code durch einen Buchstaben bestimmt wird.

**4.** Verfahren nach einem der vorhergehenden Ansprüche, wobei die Herstellungswoche durch eine ganze Zahl zwischen 1 und 6 bestimmt wird.

**5.** Verfahren nach einem der vorhergehenden Ansprüche, während dessen die Matrikelnummer und die Herstellungswoche des Luftreifens ausgehend von 10 Werten (2; R; Y; L; O; 56000) ermittelt werden, nämlich 4 Buchstaben und 6 Ziffern, die je durch die Decodierung der im beschränkten Intervall (16) gelesenen Daten erhalten werden.

**6.** Verfahren nach einem der vorhergehenden Ansprüche, während dessen die gelesenen Daten durch Zerlegen der Binärzahl (N), die in den Bits des beschränkten Intervalls in einer Basis (B) gespeichert ist, die durch eine freie erzeugende Familie von Vektoren definiert wird, decodiert werden, wobei diese Familie sich von einer Familie von Polynomen unterscheidet, wobei eine Familie von Polynomen als eine Familie des Typs ($A^0$; $A^1$; $A^2$; ...; $A^n$) definiert wird, wobei n eine positive ganze Zahl und A eine konstante reelle Zahl ist.

**7.** Verfahren nach einem der vorhergehenden Ansprüche, während dessen die gelesenen Daten durch Zerlegung der in den Bits des beschränkten Intervalls in einer Datenbasis (B), die durch eine freie erzeugende Familie von Vektoren ($X_0$; $X_1$; ...; $X_n$) definiert wird, gespeicherten Binärzahl decodiert werden, wobei einer oder mehrere der Zerlegungskoeffizienten ($c_i$) in der Basis einem Wert entspricht, der es ermöglicht, eines oder mehrere Mitglieder der Gruppe zu bestimmen, die eine Nummer, eine Fabrik, eine Woche, einen Monat, ein Jahr der Herstellung des Luftreifens und einen Code enthält, der zur Runderneuerung des Luftreifens verwendet wird.

8. Verfahren nach dem vorhergehenden Anspruch, während dessen die freie arithmetische Basis (B) eine Dimension gleich 6 hat, wobei die Zerlegung der im beschränkten Intervall gespeicherten Binärzahl sechs Koeffizienten ($c_0$; $c_1$; $c_2$; $c_3$; $c_4$; $c_5$) liefert, bei denen:

    - der erste Koeffizient ($c_0$) der Zerlegung es ermöglicht, eine Herstellungswochennummer des Luftreifens zu bestimmen,
    - der zweite Koeffizient ($c_1$) der Zerlegung es ermöglicht, einen Buchstaben zu bestimmen, der einem zur Runderneuerung des Luftreifens verwendeten Code entspricht,
    - die dritten, vierten und fünften Koeffizienten ($c_2$; $c_3$; $c_4$) der Zerlegung es ermöglichen, drei Buchstaben zu bestimmen, die zusammen einen Monat, eine Fabrik und ein Jahr der Herstellung des Luftreifens anzeigen,
    - der sechste Koeffizient ($c_5$) der Zerlegung es ermöglicht, eine Herstellungsnummer des Luftreifens zu bestimmen.

9. Verfahren nach dem vorhergehenden Anspruch, während dessen die gelesenen Daten durch Zerlegung der im beschränkten Intervall in der Basis (B), die durch die folgende freie erzeugende Familie: ($1$; $6^1$; $6*24^1$; $6*24^2$; $6*24^3$; $6*24^4$) definiert wird, gespeicherten Binärzahl decodiert werden.

10. Verfahren nach einem der vorhergehenden Ansprüche, während dessen der Speicherbereich (22) außer dem beschränkten Intervall (16) mindestens ein Intervall (I1, 12, 13, 14, 15) von Bits enthält, das für mindestens ein Element reserviert ist, das unter einer Protokoll-Kopfzeile, einem Filterwert, einem Teilungswert, einer Kennung des Herstellers des Luftreifens und einer Objektreferenz ausgewählt wird.

11. Verfahren nach einem der vorhergehenden Ansprüche, wobei der Speicherbereich (22) so genormt wird, dass die in diesem Bereich gespeicherte Zahl von Bits durch eine Norm begrenzt wird, wobei die Speichereinrichtungen (20) ebenfalls einen "freier Bereich" genannten Datenspeicherbereich (24) enthalten.

12. Verfahren zum Schreiben von Daten in eine in einen Luftreifen eingebaute elektronische Vorrichtung (10), die ein späteres Lesen mittels Durchführung eines Leseverfahrens nach einem der vorhergehenden Ansprüche erlaubt, während dessen:

    - die Matrikelnummer und die Herstellungswochennummer des Luftreifens in eine Folge von alphanumerischen Werten übersetzt werden,
    - jeder Wert gemäß einer ersten Stufe codiert wird, um eine Folge von Koeffizienten genannten ganzen Zahlen ($c_0$; $c_1$; $c_2$; $c_3$; $c_4$; $c_5$) zu erhalten,
    - eine Zahl berechnet wird, indem jeder Koeffizient ($c_0$; $c_1$; $c_2$; $c_3$; $c_4$; $c_5$) mit einem entsprechenden Vektor ($X_0$; $X_1$; $X_2$; $X_3$; $X_4$; $X_5$) einer vorgegebenen freien arithmetischen Basis multipliziert wird,
    - diese Zahl (N) in Bits codiert wird,
    - diese Zahl (N) in Bits in das beschränkte Intervall (16) geschrieben wird.

13. Computerprogramm, **dadurch gekennzeichnet, dass** es Codeanweisungen enthält, um die Ausführung der Schritte eines Leseverfahrens nach einem der Ansprüche 1 bis 11 oder eines Schreibverfahrens nach Anspruch 12 zu befehlen, wenn es auf einem Computer ausgeführt wird.

14. Einheit zum Lesen von Daten, die in Form von Bits in einer in einen Luftreifen eingebauten elektronischen Vorrichtung (10) gespeichert sind, zur Durchführung eines Leseverfahrens nach einem der Ansprüche 1 bis 11, **dadurch gekennzeichnet, dass** sie Einrichtungen zum Lesen von Daten, die in der elektronischen Vorrichtung gespeichert sind, und Einrichtungen zur Decodierung der gelesenen Bits enthält, um die Matrikelnummer und die Herstellungswochennummer des Luftreifens zu liefern.

## Claims

1. Method for reading data, wherein the data are stored in an electronic device (10) integrated into a tyre identified by a serial number and a manufacturing week number, the device (10) comprising data storage means (20), the storage means (20) comprising a data storage zone (22) comprising a storage range (I6) in the form of bits, **characterized in that**, this range being called the restricted range and comprising a number of bits which is less than or equal to 38, in which method:

- the data stored in the restricted range (I6) are read (30), and
- the data that have been read are decoded in order to determine (38) the serial number and the week number of the tyre.

2. Method according to Claim 1, in which the decoding of the data read from the restricted range provides, in a first step (32), values ($c_0$ ; $c_1$ ; $c_2$ ; $c_3$ ; $c_4$ ; $c_5$) that can be used to identify a production number, a factory, a week, a month and year of manufacture of the tyre, and, if appropriate, a code used for the retreading of the tyre, and that can be used to determine, in a second step (38), the serial number and part of the DOT number of the tyre.

3. Method according to the preceding claim, wherein

   - the production number is identified by 5 digits, and/or
   - the factory, the month and the year of manufacture are identified by a combination of 3 letters, and/or
   - the week of manufacture is identified by one digit, and/or
   - the code used for retreading the tyre is identified by one letter.

4. Method according to any of the preceding claims, wherein the week of manufacture is identified by an integer digit from 1 to 6.

5. Method according to any of the preceding claims, wherein the serial number and the week of manufacture of the tyre are determined from 10 values (2 ; R ; Y ; L ; O ; 56000), namely 4 letters and 6 digits, each being obtained by decoding the data read from the restricted range (I6).

6. Method according to any of the preceding claims, wherein the data that have been read are decoded by decomposition of the binary quantity (N) stored in the bits of the restricted range on a base (B) defined by a free generating family of vectors, this family being distinct from a family of polynomials, a family of polynomials being defined as a family of the type ($A^0$; $A^1$; $A^2$; ...; $A^n$), where n is a positive integer and A is a constant real quantity.

7. Method according to any of the preceding claims, wherein the data that have been read are decoded by decomposition of the binary quantity stored in the bits of the restricted range on a base (B) defined by a free generating family of vectors ($X_0$ ; $X_1$ ; ... ; $X_n$), one or more of the decomposition coefficients ($c_i$) in the base corresponding to a value that can be used to identify one or more members of the group comprising a production number, a factory, a week, a month, a year of manufacture of the tyre and a code used for retreading the tyre.

8. Method according to the preceding claim, wherein the dimension of the free arithmetic base (B) is 6, the decomposition of the binary quantity stored in the restricted range providing six coefficients ($c_0$; $c_1$; $c_2$; $c_3$; $c_4$; $c_5$), of which:

   - the first ($c_0$) coefficient of the decomposition can be used to identify a manufacturing week number of the tyre,
   - the second ($c_1$) coefficient of the decomposition can be used to identify a letter corresponding to a code used for the retreading of the tyre,
   - the third, fourth and fifth ($c_2$; $c_3$; $c_4$) coefficients of the decomposition can be used to identify three letters which, in combination, indicate a month, a factory and a year of manufacture of the tyre,
   - the sixth ($c_5$) coefficient of the decomposition can be used to identify a production number of the tyre.

9. Method according to the preceding claim, wherein the data that have been read are decoded by decomposition of the binary quantity stored in the restricted range on the base (B) defined by the following free generating family: (1; $6^1$; $6*24^1$; $6*24^2$; $6*24^3$; $6*24^4$).

10. Method according to any of the preceding claims, wherein the storage zone (22) comprises, in addition to the restricted range (I6), at least one range (I1, I2, I3, I4, I5) of bits reserved for at least one element chosen from among a protocol header, a filter value, a partition value, an identifier of the tyre manufacturer, and an item reference.

11. Method according to any of the preceding claims, wherein the storage zone (22) is standardized, so that the quantity of bits stored in this zone is limited by a standard, the storage means (20) also comprising a data storage zone (24), called the "free zone".

12. Method for writing data to an electronic device (10) integrated in a tyre, allowing the data to be read subsequently by using a reading method according to any of the preceding claims, in the course of which:

- the serial number and the manufacturing week number of the tyre are converted to a sequence of alphanumeric values,
- each value is encoded in a first step, so as to obtain a sequence of integers called coefficients ($c_0$ ; $c_1$ ; $c_2$ ; $c_3$ ; $c_4$ ; $c_5$),
- a quantity is calculated by multiplying each coefficient ($c_0$ ; $c_1$ ; $c_2$ ; $c_3$ ; $c_4$ ; $c_5$) by a corresponding vector ($X_0$ ; $X_1$ ; $X_2$ $X_3$ $X_4$ $X_5$) of a predetermined free arithmetic base,
- this quantity (N) is encoded in bits,
- this quantity (N) in bits is written to the restricted range (I6).

13. Computer program, **characterized in that** it comprises coded instructions adapted to command the execution of the steps of a reading method according to any of the Claims 1 to 11 or of a writing method according to Claim 12 when it is run on a computer.

14. Unit for reading data stored in bit form in an electronic device (10) integrated into a tyre for the application of a reading method according to any of Claims 1 to 11, **characterized in that** it comprises means for reading data stored in the electronic device and means for decoding the bits that have been read so as to provide the serial number and the manufacturing week number of the tyre.

**Fig. 1**

00110000   000   110   0001010100101010101011

I1      I2    I3        I4

0000000011101001110011 01

I5

101001011111111000111010011000100111

I6

011100010101010010000011010011000101
1001....

**Fig. 2**

**Fig. 3**

```
┌──────┐
│  30  │
└──────┘
   │
   ▼
┌──────┐
│  32  │
└──────┘
   │
   │      ◄───────────┐
   ▼                  │
 ◇────◇          ┌──────┐
 │ 34 │ ───────► │  36  │
 ◇────◇          └──────┘
   │
   ▼
┌──────┐
│  38  │
└──────┘
```

**Fig. 4**

```
┌──────┐
│  40  │
└──────┘
   │
   ▼
┌──────┐
│  42  │
└──────┘
   │
   ▼
┌──────┐
│  44  │
└──────┘
   │
   ▼
┌──────┐
│  46  │
└──────┘
   │
   ▼
┌──────┐
│  48  │
└──────┘
   │
   ▼
┌──────┐
│  50  │
└──────┘
```